# EUROPEAN PATENT APPLICATION

(11) **EP 1 484 484 A1**
(43) Date of publication of application: **08.12.2004**
(21) Application number: 04013138.5
(22) Date of filing: 03.06.2004
(51) Int. Cl.: F01N 3/022, F01N 3/035, F01N 3/027

(54) **Metal filter, black smoke minute particle removing apparatus having metal filter, and diesel engine automobile**

(30) Priority: 05.06.2003 JP 2003160388
(71) Applicant: O-DEN Corporation, Tokyo (JP)
(72) Inventor: Endo, Kiyomu, O-DEN Corporation, Tokyo (JP)
(74) Representative: Ghioni, Carlo Raoul Maria

(57) **Abstract**

A metal filter is provided which is capable of enhancing efficiency of seizing and removing black smoke minute particles by simplified and low-cost configuration. The metal filter is made up of a corrugated roll-shaped metal porous body (3, 6, 10, 14, 20, 30) fabricated by winding up, in a multi-layer manner and in a vortex form, a metal plate in which many through holes (2, 9, 12, 17, 19, 23, 29, 31) having surface-protrusions (1, 7, 11, 15, 18, 22, 28) at edge portions and which repeatedly forms a sine-wave shaped rising and falling structure. Exhaust gas from a diesel engine passes through clearances (4) among layers of the metal porous body (3, 6, 10, 14, 20, 30) and black smoke minute particles contained in the exhaust gas are seized and removed. The through holes (2, 9, 12, 17, 19, 23, 29, 31) are formed in crest portions (M) and trough portions (V) making up the rising and falling portions. Approximately all or a greater part of surface-protrusions (1, 7, 11, 15, 18, 22, 28) are formed on column-like concave portions (5) corresponding to lower parts of the crest portions (M) and to upper parts of the trough portions (V).

## Description

### BACKGROUND OF THE INVENTION

### Field of the Invention

The present invention relates to a metal filter capable of removing black smoke minute particles, a black smoke minute particle removing apparatus having the metal filter and a diesel engine automobile having the black smoke minute particle removing apparatus being equipped with the metal filter and more particularly to the metal filter fabricated by winding up or folding back, in a multi-layer, corrugated metal plates on which many through holes each having surface-holding (face-like) protrusions in edge portions of each of many through holes are bored and to the black smoke minute particle removing apparatus being equipped with the metal filter and to the diesel engine automobile having the black smoke minute particle removing apparatus being equipped with the metal filter.

The present application claims priority of Japanese Patent Application No.2003-160388 filed on June 5, 2003, which is hereby incorporated by reference.

### Description of the Related Art

Attention under regulations on emission of exhaust gas from automobiles has been focused on NOx (Nitrogen Oxides) mainly containing nitrogen dioxide considered as a carcinogen or a like. However, black smoke minute particles are also problems. That is, there exist many black smoke minute particles mainly containing carbon in exhaust gas from diesel engine automobiles. The black smoke minute particles, after having been puffed out into the air through an exhaust path, fly in the air for a long time and finally fly down on a floor surface, road surface, clothes, or a like in a form of soot or a like. In recent years, a report has been successively made that, the black smoke minute particles containing carbon floating in the air easily adsorb substances including various chemicals such as carcinogenesis related substances and, when a human inhales such the black smoke minute particles, enters a human body which provokes a respiratory disease.

Thus, not only NOx but also a particulate material (PM) is now an important issue in emission regulations. As a means to protect environmental air from pollution caused by black smoke minute particles from diesel engine automobiles, a black smoke minute particle collecting apparatus with a black smoke removing filter made up of a metal fiber, a honeycomb-shaped element, or a like attached to an exhaust path of a diesel engine mounted on a vehicle is provided.

However, the fine black smoke removing filter of this type has a disadvantage in that, if a mesh is made fine, the efficiency of collecting black smoke minute particles is improved and, on the other hand, clogging of the mesh caused by the collected black smoke minute particles occurs, thus causing a loss of pressure to increase and, if the mesh is made coarse, the efficiency of collecting the black smoke minute particles is reduced.

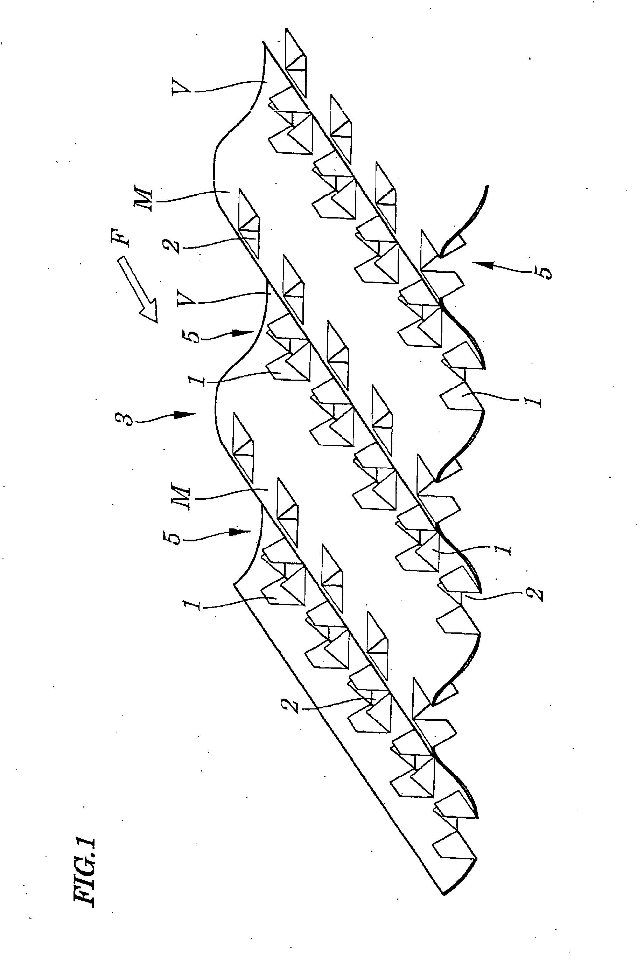

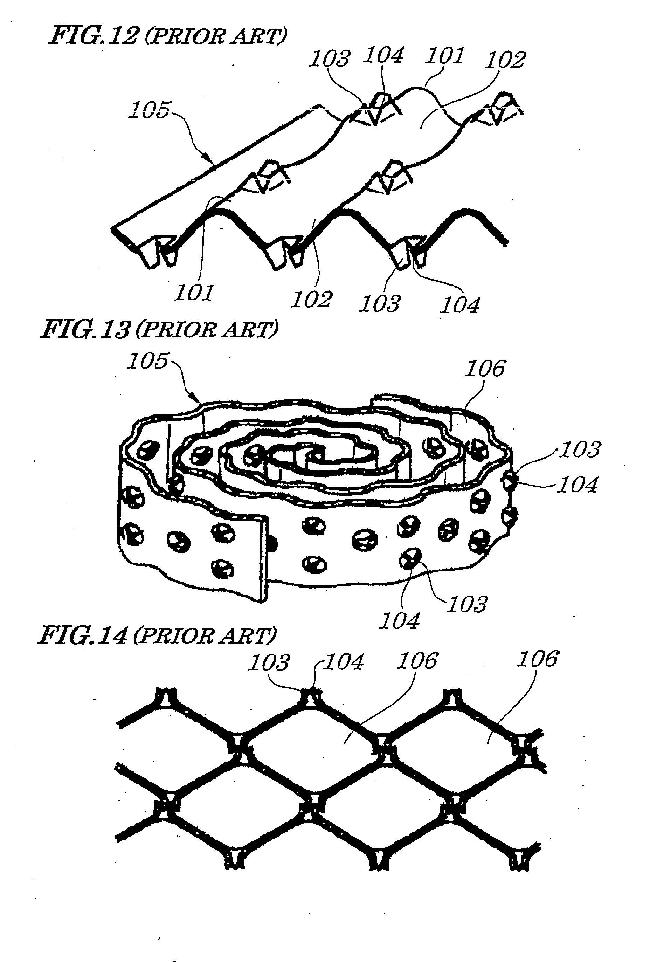

To solve this inconvenience, a conventional metal filter for a diesel engine is disclosed in Japanese Patent Application Laid-open Nos. Hei 9-245938 (Fig. 1 to Fig. 6), Hei 11-257048 (Fig. 1 to Fig. 4), and 2002-47915 (Fig. 1 to Fig. 3). The disclosed metal filter, as shown in Fig. 12, is made up of a metal porous body fabricated, as shown in Fig. 13, by rolling in a metal plate 105, in a vortex form, in which many through holes 104 are bored each having burr-shaped or yoke-shaped protrusions 103 formed in edge portions of each of the through holes 104 in each of wave-shaped or concave and convex - shaped crest portions 101 or trough portions 102. In a state in which the metal plate 105 is rolled around in a vortex form, as shown in Fig. 14, burr-shaped or yoke-shaped protrusions are positioned between surfaces of the metal plates 105 facing one another in a state in which the metal plates 105 engage with one another and, as a result, clearances serving as exhaust gas flow paths 106 are formed in a stable state. The exhaust gas flow paths 106 communicate with one another via the through holes 104 bored in the metal plate 105, as shown in Fig. 14. With such the configurations as above, since the burr-shaped or yoke-shaped protrusions 103 facing the exhaust gas paths 106 serve as flow resistance, exhaust gas, as it flows in the exhaust gas paths 106, is put into a turbulent flow state in which the exhaust gas is diffused in all areas of the exhaust gas paths 106 and passes uniformly through the metal filter. Since unburnt black smoke minute particles floating in the exhaust gas, while passing through the metal filter, are seized by surfaces of the crest portions 101 or trough portions 102 of the metal plate 105 and further by burr-shaped or yoke-shaped protrusions 103 acting as an obstacle, exhaust gas having passed through the metal filter is spewed as normal gas containing no black smoke minute particles.

However, such the conventional metal filter as described above has a disadvantage. That is, as shown in Fig. 14, since each of the burr-shaped or yoke-shaped protrusions 103 sets the crest portions 101 being adjacent to one another apart from each other, clearances (path cross-sectional area among layers of the metal plate) between the crest portions 101 being adjacent to one another cannot be made small and, therefore, a ratio of an area of contact with a black smoke area to a cross-sectional area of a path among layers of the metal plate can not be improved. As a result, due to much black smoke minute particles being spewed together with exhaust gas without being seized by the metal filter, the efficiency of removing the black smoke minute particles cannot be achieved as expected.

### SUMMARY OF THE INVENTION

In view of the above, it is an object of the present invention to provide a metal filter having a simple and low-cost structure which is capable of enhancing the efficiency of seizing and removing black smoke minute particles and a black smoke minute particle removing apparatus being equipped with the metal filter and a diesel engine automobile having the black smoke minute particle removing apparatus being equipped with the metal filter.

According to a first aspect of the present invention, there is provided a metal filter including:
a metal porous body fabricated by winding up or folding back, in a multi-layer manner and in a direction of corrugation, a corrugated metal plate in which many through holes having surface-holding (face-like) protrusions in edge portions of each of the many through holes are bored and which repeatedly forms column-like rising and falling portions, for seizing and removing black smoke minute particles contained in exhaust gas from a diesel engine by making the exhaust gas pass through clearances among layers in the metal porous body;
wherein approximately all or a greater part of the surface-holding protrusions are formed on sides of column-like concave portions out of the column-like rising and falling portions and the clearances among layers, each serving as a flow path for the exhaust gas from a diesel engine, existing on one side of the metal plate communicate with the clearances among layers, also each serving as a flow path for the exhaust gas from a diesel engine, existing on another side of the metal plate through the through holes having the surface-holing protrusions.

According to a second aspect of the present invention, there is provided a metal filter including:
a metal porous body fabricated by winding up or folding back, in a multi-layer manner and in a direction of corrugation, a corrugated metal plate in which many through holes having surface-holding protrusions in edge portions of each of the many through holes are bored and which repeatedly forms column-like rising and falling portions, for seizing and removing black smoke minute particles contained in exhaust gas from a diesel engine by making the exhaust gas pass through clearances among layers in the metal porous body;
wherein the through holes are bored in crest portions and trough portions making up the column-like rising and falling portions and approximately all or a greater part of the surface-holding protrusions are formed on sides of column-like concave portions corresponding to lower parts of the crest portions and to upper parts of the trough portions, and
wherein said clearances among layers, each serving as a flow path for said exhaust gas from a diesel engine, existing on one side of said metal plate communicate with said clearances among layers, also each serving as a flow path for said exhaust gas from a diesel engine, existing on another side of said metal plate through said through holes having said surface-holing protrusions.

In the foregoing, a preferable mode is one wherein, in the metal porous body, approximately all or a greater part of many surface-holding protrusions are formed in edge portions of the through holes in a manner in which the surface-holding protrusions are placed within column-like concave portions without extending off the column-like concave portions.

Also, a preferable mode is one wherein, in the metal porous body, many surface-holding protrusions or many of the surface-holding protrusions having main sizes out of the surface-holding protrusions are formed in the edge portions of the through holes in a manner in which the surface-holding protrusions interrupt flows of the exhaust gas from a diesel engine within the clearances among layers.

Also, a preferable mode is one wherein, in the metal porous body, many surface-holding protrusions or many of the surface-holding protrusions having main sizes out of the surface-holding protrusions are formed in edge portions positioned on lower stream sides of the flows out of edge portions of the'through holes in a manner in which the surface-holding protrusions interrupt flows of the exhaust gas from a diesel engine within the clearances among layers.

Also, a preferable mode is one wherein, in the metal porous body, the many surface-holding protrusions or many of the surface-holding protrusions having main sizes out of the surface-holding protrusions are formed in the edge portions of the through holes, one by one or by two or more, in staggered or zig-zag arrangements in a longitudinal direction within the column-like concave portions.

Also, a preferable mode is one wherein, in the metal porous body, many through holes are formed one by one or by two or more and in staggered or zig-zag arrangements, 'in a longitudinal direction within the column-like concave portions making up the rising and falling portions.

Also, a preferable mode is one wherein, in the metal porous body, many surface-holding protrusions formed in staggered or zig-zag arrangements or many of the surface-holding protrusions having main sizes out of the surface-holding protrusions are formed in a manner in which, when seen from the longitudinal direction within the column-like concave portions, partially overlap.

Also, a preferable mode is one wherein a relation between a height H of each of the surface-holding protrusions and a depth D of each of the column-like concave portions making up the rising and falling portions is set so that 0. 7D ≦ H ≦ 1. OD.

Also, a preferable mode is one wherein the corrugated metal plate is made up of a metal plate which repeatedly forms approximately sine-wave shaped, approximately triangular-wave shaped, approximately square-wave shaped, or approximately trapezoidal-wave shaped rising and falling portions.

Also, a preferable mode is one wherein, in the metal porous body, one or more minute through holes are bored in each of the surface-holding protrusions themselves.

Also, a preferable mode is one wherein the metal filter is fabricated by winding up or folding back the corrugated metal plate and a metal flat plate in a multi-layer manner in a manner in which the corrugated metal plate and the metal'flat plate, having a metal surface being approximately flat compared with that of the corrugated metal plate and having a same width as the corrugated metal plate or having a width being smaller than that of the corrugated metal plate, overlap one another.

Also, a preferable mode is one wherein many through holes are bored also in the metal flat plate.

Also, a preferable mode is one wherein many through holes each having surface-holding protrusions in edge portions of the through hole are bored in the corrugated metal plate and many through, holes having no surface-holding protrusions in edge portions of the through hole are bored in the metal flat plate.

Also, a preferable mode is one wherein the metal porous body is coated with a catalyst which promotes burning of seized black smoke minute particles.

Also, a preferable mode is one wherein the metal porous body undergoes specified insulating coating processes and is connected to a power source, which causes the metal porous body to function as an electrical heating body to burn the seized black smoke minute particles.

According to a third aspect of the present invention, there is provided a black smoke minute particle removing apparatus having the metal filter described above on a path for exhaust gas from a diesel engine.

According to a fourth aspect of the present invention, there is provided a diesel engine automobile being equipped with the black smoke minute particle removing apparatus described above on the path for exhaust gas from a diesel engine.

In the foregoing, a preferable mode is wherein approximately all or a greater part of the surface-holding protrusions are formed in a bent and erected manner from edge portions of the through holes toward sides of the column-like concave portions making up column-like rising and falling portions.

Also, a preferable mode is one wherein each of the through holes has a surrounding edge made up of four side edge portions and, in each of the edge portions, each of the surface-holding protrusions is formed in a bent and erected manner toward a side of each of the column-like concave portions making up the column-like rising and falling portions.

Furthermore, a preferable mode is one wherein each of the through holes has a surrounding edge made up of four side edge portions and is bored in the crest and the trough making up the column-like rising and falling portions and, in each of the edge portions, each of the surface-holding protrusions is formed in a bent and erected manner toward a side of each of the column-like rising and falling portions corresponding to a lower part of the crest and to an upper part of the trough.

With the above configuration, approximately all or a greater part of the surface-holding protrusions are formed within the column-like concave portions and, therefore, a ratio of cross-sectional area of an obstacle (collision and contact) to a cross-sectional area of a flow path among layers is made remarkably large. As a result, the efficiency of removing black smoke minute particles can be further enhanced. Moreover, to improve the efficiency of removing black smoke minute particles, it is not necessary that clearances among layers are made narrow and, therefore, the metal filter can be manufactured easily and at low-costs and no clogging occurs accordingly.

### BRIEF DESCRIPTION OF THE DRAWINGS

The above and other objects, advantages, and features of the present invention will be more apparent from the following description taken in conjunction with the accompanying drawings in which:
Fig. 1 is a partially expanded perspective view of a metal porous body making up a metal filter according to a first embodiment of the present invention;
Fig. 2 is a partially expanded cross-sectional view of the metal filter fabricated by winding up the metal porous body in a vortex form according to the first embodiment of the present invention;
Fig. 3 is a partially expanded perspective view of the metal filter according to the first embodiment of the present invention;
Fig. 4 is a partially expanded perspective view of a metal porous body making up a metal filter of a second embodiment of the present invention;
Fig. 5 is a partially expanded cross-sectional view of the metal filter fabricated by winding up the metal porous body in a vortex form;
Fig. 6 is a partially expanded perspective view of a metal porous body making up a metal filter of a third embodiment of the present invention;
Fig. 7 is a partially expanded perspective view of a metal porous body making up a metal filter of a fourth embodiment of the present invention;
Fig. 8 is a partially expanded perspective view of a metal porous body making up a metal filter of a fifth embodiment of the present invention;
Fig. 9 is a partially expanded perspective view of a metal porous body making up a metal filter of a sixth embodiment of the present invention;
Fig. 10 is a partially expanded cross-sectional view of a metal filter of a seventh embodiment of the present invention;
Fig. 11 is a partially expanded perspective view of the metal filter of the seventh embodiment of the present invention;
Fig. 12 is a partially expanded perspective view of a conventional metal porous body of a conventional metal filter;
Fig. 13 is a partially expanded perspective view of the conventional metal filter; and
Fig. 14 is a partially expanded cross-sectional view showing the conventional metal filter fabricated by rolling in the conventional metal porous boy.

### DETAILED DESCRIPTION OF THE PREFERRED EMBODIMENTS

Best modes of carrying out the present invention will be described in further detail using various embodiments with reference to the accompanying drawings.

In descriptions of each embodiment below, a word "metal plate" represents a wide concept including a metallic foil. Moreover, a process of "winding up or folding back a metal plate" also represents a wide concept including not only a case in which metal plates are folded in two and then are wound up or folded back and a case in which metal plates are wound up or folded back with two or more metal plates overlapped, but also a case in which metal plates are rolled in with, for example, a metal plate of other kind, metal band plate, or metal wire member being interposed between the metal plates. Moreover, a shape of a through hole described below may be arbitrary.

### First Embodiment

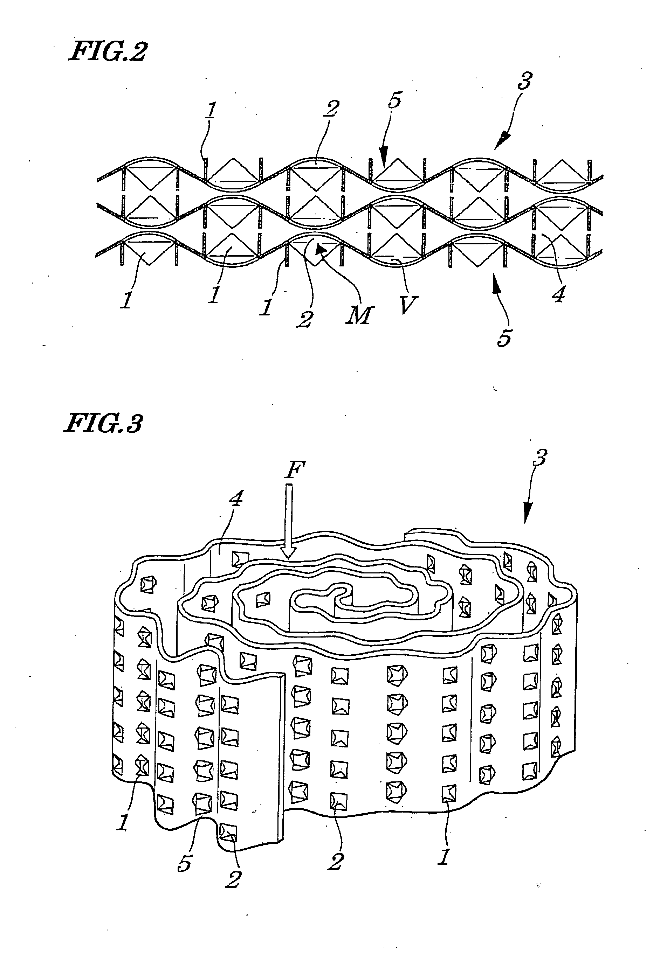

Figure 1 is a partially expanded perspective view of a metal porous body making up a metal filter according to a first embodiment of the present invention. Figure 2 is a partially expanded cross-sectional view of the metal filter fabricated by winding up the metal porous body in a vortex form according to the first embodiment. Figure 3 is a partially expanded perspective view of the metal filter according to the first embodiment. The metal filter shown in Figs. 1, 2, and 3 are the same as that shown in Figs. 12 and 14 in that the metal filter is made up of a metal porous body 3 fabricated by winding up a corrugated roll-shaped metal plate, in a multi-layer manner, in which many through holes 2 each having surface-holding (face-like) protrusions 1 in edge portions of each of the through holes 2 are bored and which repeatedly forms sine-wave shaped rising and falling portions and in that exhaust gas from a diesel engine is made to pass through clearances 4 among layers of the metal porous body 3 and black smoke minute particles contained in the exhaust gas from the diesel engine are seized and removed by the metal porous body 3 and the above through holes 2 are bored in crest portions M and trough portions V which make up the above column-like rising and falling portions. However, unlike in the conventional case of the metal filter shown in Figs. 12 and 14 in which the burr-shaped or yoke-shaped protrusions 103 are formed on sides of column-like convex portions corresponding to further upper parts of the crest portions M and further lower parts of the trough portions v of the metal plate, in the metal filter of the first embodiment shown in Figs. 1, 2, and 3, approximately all or a greater part of the surface-holding (face-like) protrusions 1 are formed on sides of column-like concave portions 5 corresponding to lower parts of the crest portions M and upper parts of the trough portions V of the metal plate.

In the case of the metal filter of the first embodiment, an example is shown in Fig. 2 in which the metal porous body 3 is fabricated by winding up the metal plate in a manner in which each of the crest portions M of an inner layer of the metal plate and each of the trough portions V of an outer layer of the metal plate overlap each other, that is, in a manner in which layers being adjacent to each other are in out-of-phase by 180°. However, the present invention is not limited to this, that is, the layers may be in out-of-phase randomly and, of course, the layers may be in phase.

In the first embodiment, a pitch between each of the rising portions and each of the falling portions in the metal porous body 3 is 0. 6 mm to 4.0 mm and each of the through holes 2 is a square with each of four sides being 0,3 mm to 0.5 mm. These figures are examples and may be changed depending on a load or a requested accuracy. Each of the surface-holding protrusions 1 may extend off somewhat from each of the column-like concave portions 5, however, it is preferable that approximately all or a greater part of the surface-holding protrusions 1 are within the column-like concave portions 5. According to experiments, it is most preferable that a relation between a height H of each of the surface-holding protrusions 1 and a depth D of each of the column-like concave portions 5 each making up the rising and falling portions is set so that 0. 7D ≦ H ≦ 1. OD (see Fig. 2) . Moreover, a shape of each of the through holes 2 is not only square but also circular, elliptical, slit-like, triangular, trapezoidal, rhombic, or parallelogrammic. It also may have either a definite form or an indefinite form. A material for the metal porous body 3 is preferably a stainless steel such as SUS304 having a thickness of, for example, about 40 µm.

The metal porous body 3 is fabricated by a method in which a corrugating bend process is performed on long lengths of a metal flat plate to form a corrugated metal plate and press processing in normal and inverse directions is performed in each of the column-like concave portions 5 to bore each of the through holes 2 and, at the same time, each of the protrusions 1 is formed within each of the column-like concave portions 5 (see Fig. 1) . That is, each of .the through holes 2 and each of the surface-holding protrusions 1 are simultaneously formed in such a manner in which a metal piece existing at a position of forming each of the through holes 2 is not fully removed from the metal plate with one side corresponding to an edge portion of each of the through holes 2 being left and the metal piece is bent and erected on a side of each of the column-like concave portions 5. Here, each of the surface-holding protrusions 1, because it functions as a fine plate with which exhaust gas comes into collision, preferably has, to some extent, large area. In the embodiment, as shown in Fig. 1, out of four sides making up the edge portions of each of the through holes 2, on two sides positioned on an upper stream side and lower stream side of a flow F of exhaust gas are formed triangular surface-holding protrusions 1 and on remaining two sides are formed trapezoidal surface-holding protrusions 1. However, out of four sides making up the edge portions of each of the through holes 2, on two sides positioned on an upper stream side and lower stream side of a flow F of exhaust gas may be formed trapezoidal surface-holding protrusions 1 and on remaining two sides may be formed triangular surface-holding protrusions 1. The shape of each of the surface-holding protrusions 1 may be set to be not only triangular or trapezoidal but also arbitrary when necessary.

The metal filter having the above configurations is embedded in a diesel engine automobile, that is, in an exhaust path of a diesel engine as a component of a black smoke minute particle removing apparatus. While a diesel engine is being operated; since, when exhaust gas from a diesel engine passes through the clearances 4 among layers of the metal filter, each of the surface-holding protrusions 1 functions as an obstacle to the flow F (Fig. 3), more particularly, as a collision piece, speed-reducing piece, route-changing piece, or through-hole leading piece, unburnt black smoke minute particles floating in the exhaust gas are easily seized by a surface and a rear face of the metal filter positioned near to each of the through holes 2, as well as by each of the surface- holding protrusions 1. The unburnt black smoke minute particles seized by the metal filter are heated by the high-temperature metal filter and/or high-temperature ambient atmosphere (exhaust gas) and burnt and then removed from the metal filter. As a result, the flow F of the exhaust gas having passed through the metal filter is spewed as normal gas without containing black smoke minute particles.

According to the above configurations, since approximately all or a greater part of the surface-holding protrusions 1 are formed in the column-like concave portions 5, a ratio of cross-sectional area of an obstacle (collision and contact) to a cross-sectional area of a flow path among layers is made remarkably large. Therefore, the efficiency of removing the black smoke minute particles can be enhanced more. Moreover, it is not necessary to make narrow the clearances among layers in order to improve the efficiency of removing black smoke minute particles and, therefore, the metal filter can be manufactured easily at low-costs which is free from clogging.

### Second Embodiment

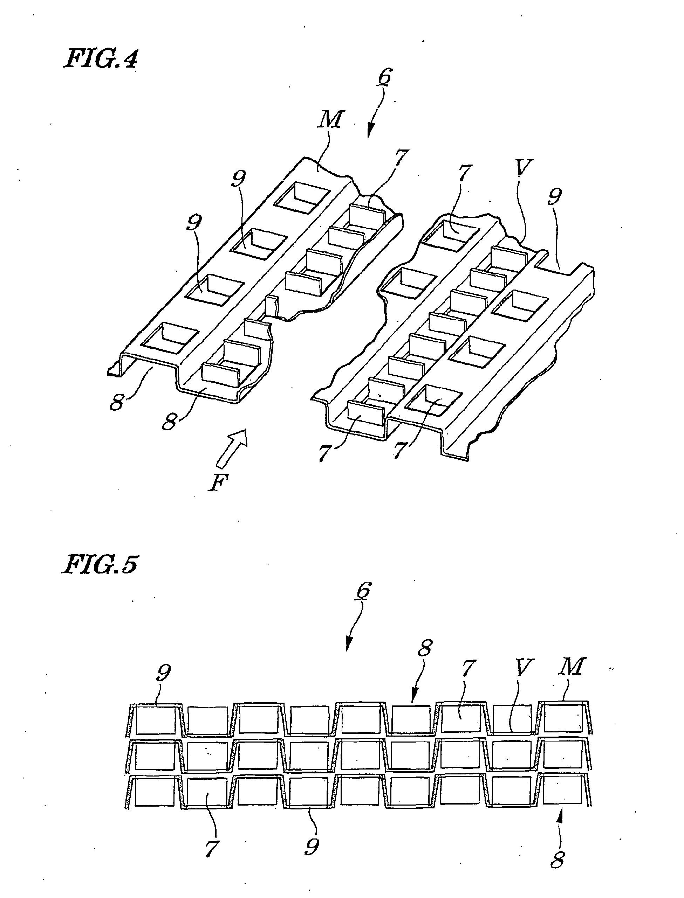

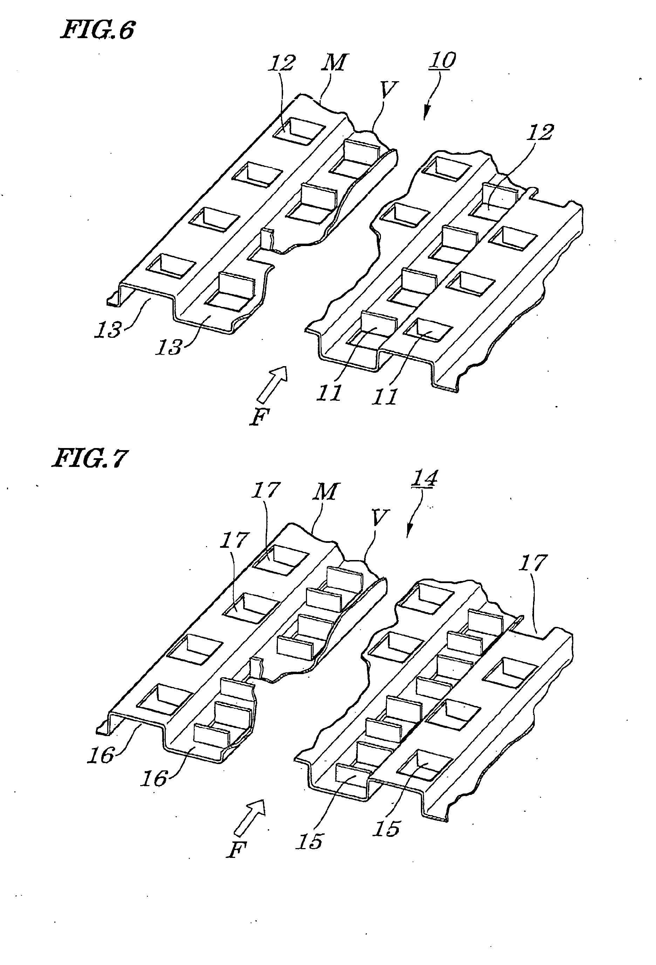

Figure 4 is a partially expanded perspective view of a metal porous body making up a metal filter of a second embodiment of the present invention. Figure 5 is a partially expanded cross-sectional view of the metal filter fabricated by winding up the metal porous body in a vortex form. The metal filter of the second embodiment, as shown in Figs. 4 and 5, is made up of the metal porous body 6 having approximately square-wave or approximately trapezoidal-wave structure which repeatedly form rising and falling portions on the metal plate and many surface-holding protrusions 7 or many of surface-holding protrusions having main sizes out of the surface-holding protrusions 7 are formed, within column-like concave portions 8 in edge portions on upper stream sides and lower stream sides of each of through holes 9 in a manner in which each of the surface-holding protrusions interrupts the flow of exhaust gas from a diesel engine. The configurations and operational functions of the metal filer shown in Figs. 4 and 5 are almost the same as those employed in the first embodiment except the above points and their descriptions are omitted accordingly. in the second embodiment, as shown in Fig. 4, a horizontal width of each of the surface holding protrusions 7 is so set as to be smaller than a horizontal width of each of the column-like concave portions 8, however, the horizontal width of each of the surface-holding protrusions 7 may be so set as to be equal to the horizontal width of each of the column-like concave portions 8. Moreover, at time of pressing process performed when the metal filter is formed, burr-shaped fine protrusions often occur in edge portions intersecting edge portions on an upper stream side and lower stream side of each of the through holes 9, however, such the fine protrusions act favorably when the efficiency of seizing the black smoke minute particles has to be enhanced. Moreover, an example is shown in Fig. 5 in which the metal porous body 6 is fabricated by winding up the metal plate in a manner in which crest portions M of an inside layer of the metal plate and crest portions M of an outside layer of the metal plate overlap each other. However, the present invention is not limited to this, that is, positions of layers on the inside and on the outside may be deviated randomly. In other words, positions of layers on the inside and on the outside may be slightly deviated in a direction from an inner radius to an outer radius.

Thus, almost the same effect as obtained by the first embodiment can be achieved by the second embodiment. In addition, according to the second embodiment, a ratio of cross-sectional area of an obstacle (collision and contact) to a cross-sectional area of a flow path among layers is made larger than that in the first embodiment and, therefore, time during which unburnt black smoke minute particles floating in the exhaust gas are made to stay within the clearances among layers of the metal filter can be increased and, as a result, the efficiency of seizing black smoke minute particles can be enhanced more.

### Third embodiment

Figure 6 is a partially.expanded perspective view of a metal porous body making up a metal filter of a third embodiment of the present invention. Configurations of the metal filter of the third embodiment, as shown in Fig. 6, are the same as those in'the second embodiment in that the metal filter is made up of the metal porous body having approximately square-wave or approximately trapezoidal-wave structure which repeatedly form rising and falling portions on the metal plate, however, differ from those in the second embodiment in that many surface-holding protrusions 11 (not including the fine protrusions) are formed only in edge portions on lower stream sides of each of the through holes 12 and are erected facing column-like concave portions 13.

According to the third embodiment of the present invention, though a flow F is interrupted by the surface-holding, protrusions 11, the through holes 12 are bored immediately before the surface-holding protrusions 11, agitating property of black smoke minute particles among layers is further improved.

### Fourth Embodiment

Figure 7 is a partially expanded perspective view of a metal porous body making up a metal filter of a fourth embodiment of the present invention. Configurations of the metal filter of the fourth embodiment, as shown in Fig. 7, are the same as those in the second embodiment in that the metal filter is made up of the metal porous body having approximately square-wave or approximately trapezoidal-wave structure which repeatedly forms rising and falling portions on the metal plate, however, differ from those in the second embodiment in that many surface-holding protrusions 15 are formed on edge portions on upper stream sides and on lower stream sides of each of the through holes 17 in a manner in which many surface-holding protrusions 15 are bored in staggered (zig-zag) arrangements along a longitudinal direction within the column-like concave portions 16 and each of the surface-holding protrusions 15 interrupts a flow F of exhaust gas from a diesel engine. Here, the many surface-holding protrusions 15 formed in staggered (zig-zag) arrangements, when seen from a longitudinal direction within each of the column-like concave portions 16, are arranged in a manner in which the many surface-holding protrusions 15 overlap partially.

Thus, almost the same effect as obtained by the first embodiment can be achieved by the fourth embodiment. In addition, according to the fourth embodiment, surface-holding protrusions 15 are formed in staggered (zig-zag) arrangements in a manner in which each of the surface-holding protrusions 15 has a size and an interval that do not cause clogging of the fine black smoke minute particles and surface-holding protrusions 15 and 15, when seen from the longitudinal direction within the column-like concave portions 16, partially overlap and, as a result, the flow F of exhaust gas from a diesel engine is surely interrupted and, therefore, a flight obstructing property against the black smoke minute particles can be further improved. Moreover, since the improvement of the flight obstructing property is not achieved by making narrow the clearances among layers and among columns of the metal plate, no clogging occurs accordingly. As a result, the efficiency of removing the black smoke minute particles is further improved.

### Modified Embodiment of Fourth Embodiment

In the above fourth embodiment, the through-holes 17 are bored, one by one in staggered (zig-zag) arrangements, in a longitudinal direction within the column-like concave portions 16 and, therefore, the surface-holding protrusions 15 are also formed, one by one in staggered arrangements, however, it is needless to say that the surface-holding protrusions, not one by one but by two and more, may be formed in staggered arrangements. Moreover, it is not always necessary that the surface-holding protrusions 15 and 15 formed within the column-like concave portions 16 partially overlap. Also, so long as the surface-holding protrusions 15 are formed in staggered arrangements, it is not always necessary that the through-holes 17 are bored in staggered arrangements. The metal porous body 14 of the fourth embodiment are not only approximately square-wave shaped or approximately trapezoidal-wave shaped but also triangular-wave shaped, elliptical-wave shaped, or sine-wave shaped, that is, so long as a metal plate has rising and falling portions, any metal plate can be used. Furthermore, formation of all or part of the surface-holding protrusion 15 on the upper stream side or on the lower stream side, out of a pair of surface-holding protrusions 15 formed on the edge portions of each of the through holes 17, may be omitted.

### Fifth Embodiment

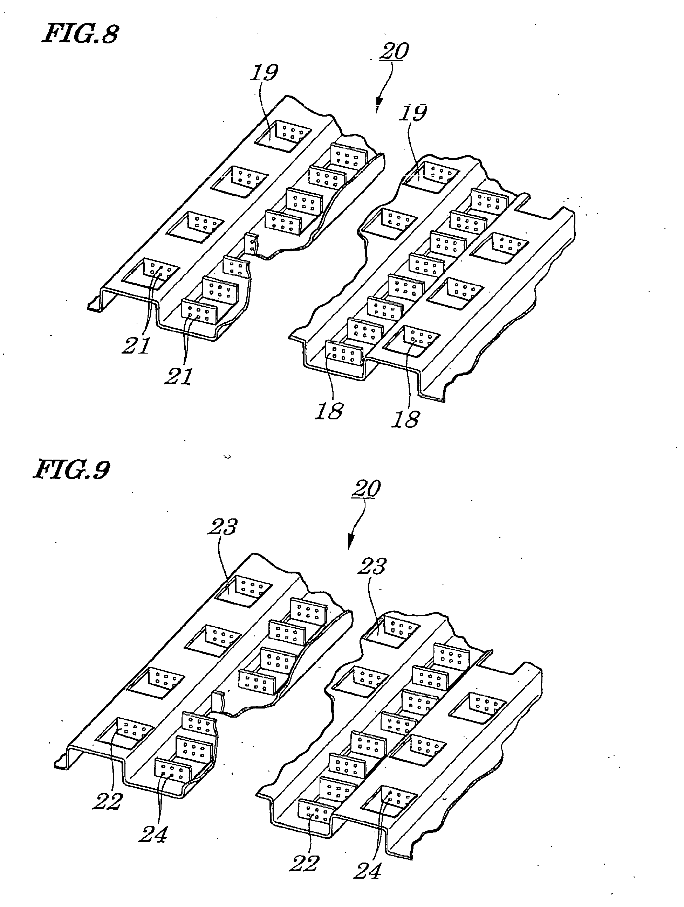

Figure 8 is a partially expanded perspective view of a metal porous body making up a metal filter of a fifth embodiment of the present invention. Configurations of the metal filter of the fifth embodiment, as shown in Fig. 8, are the same as those in the second embodiment (Fig. 4) in that the wave-shaped metal filter 20 is made up of the metal porous body having approximately square-wave or approximately trapezoidal-wave structure which repeatedly forms rising and falling portions on the metal plate, however, differ from those in the second embodiment in that two and more fine small through holes 21, as shown in Fig. 8, are bored in each of the surface-holding protrusions 18. The fine small through holes 21 preferably have fine burrs. It is preferable that each of the burrs protrudes on an upper stream side. The number of the fine small through holes is arbitrary and may be single. Moreover, the metal porous body 20 is not only approximately square-wave shaped or approximately trapezoidal-wave shaped but also sine-wave shaped or may be of any other shape. According to the second embodiment (Fig. 4), there are some cases in which turning of the flow F of exhaust gas from a diesel engine around a rear side of each of the surface-holding protrusions becomes difficult. However, in such the cases, according to configurations of the fifth embodiment, since the fine small through holes 21 are bored in the surface-holding protrusions 18 themselves, the flow F of exhaust gas from a diesel engine can turn around a rear side of each of the surface-holding protrusions 18 and, therefore, the efficiency of removing the black smoke minute particles can be remarkably improved.

### Sixth Embodiment

Figure 9 is a partially expanded perspective view of a metal porous body making up a metal filter of a sixth embodiment of the present invention. Configurations of the metal filter of the sixth embodiment, as shown in Fig. 9, are the same as those in the fifth embodiment (Fig. 8) in that many through holes 23 having surface-holding protrusions 22 at edge portions are bored and minute through holes 24 are bored also in the surface-holding protrusions 22, however, differ from those in the fifth embodiment in that many surface-holding protrusions 22, as shown in Fig. 9, are formed at edge portions of each of the through holes 23 on upper stream sides and at edge portions of the through holes 23 on lower stream sides in a manner in which the many surface-holding protrusions 22 are bored in staggered (zig-zag) arrangements along a longitudinal direction in the column-like concave portions 25 and each of the surface-holding protrusions 22 interrupts a flow F of exhaust gas from a diesel engine.

Thus, almost the same effect as obtained by the fifth embodiment can be achieved by the sixth embodiment. In addition, according to the sixth embodiment, surface-holding protrusions 22 are formed in staggered (zig-zag) arrangements in a manner in which each of the surface-holding protrusions 22 has a size and an interval that do not cause clogging of the fine black smoke minute particles and surface-holding protrusions 22 and 22, when seen from the longitudinal direction within the column-like concave portions 16, partially overlap each other and, as a result, the flow F of exhaust gas from a diesel engine is surely interrupted and, therefore, a flight obstructing property against the black smoke minute particles can be further improved. Moreover, since such the improvement of the flight obstructing property is not achieved by making narrow the clearances among layers and among columns of the metal plate, no clogging occurs accordingly. As a result, the efficiency of removing the black smoke minute particles is further improved.

### Seventh Embodiment

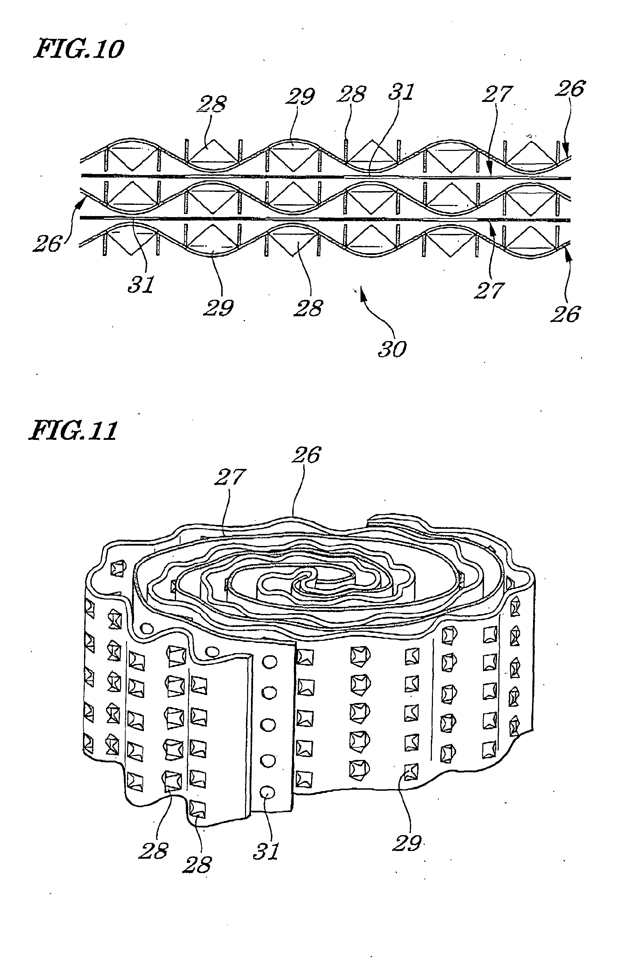

Figure 10 is a partially expanded cross-sectional view of a metal filter of a seventh embodiment of the present invention. Figure 11 is a partially expanded perspective view of the metal filter of the seventh embodiment. The metal filter of the seventh embodiment, as shown in Fig. 10 and Fig. 11, is fabricated by winding up a corrugated metal plate 26 and a metal flat plate 27 in a multi-layer manner in a manner in which the corrugated metal plate 26 forming repeatedly rising and falling portions and the metal flat plate 27 having a metal surface being .approximately flat compared with that of the corrugated metal plate 26 and having almost the same width as the corrugated metal plate 26 overlap. The metal filter is made up of a roll-shaped metal porous body 30 fabricated by winding up, in a multi-layer manner and in a vortex form, both the corrugated metal plate 26 in which many through holes 29 each having surface-holding protrusions 28 in edge portions of each of the through holes 29 are bored and which repeatedly forms the sine-wave shaped rising and falling portions and the metal flat plate 27 in which many through holes 31 having no surface-holding protrusions are bored.

According to the seventh embodiment of the present invention, since the metal filter is fabricated by winding up both the corrugated metal plate 26 having the surface-holding protrusions 28 and the metal flat plate 27 having no surface-holding protrusions 28 in a manner in which the metal plate 26 and the metal flat plate 27 overlap, engagement of one of the surface-holding protrusions 28 formed on the corrugated metal plate 26 with another of the surface-holding protrusions 28 can be prevented and, therefore, the winding-up process can be performed minutely and smoothly, which can improve an area contacted by exhaust gas.

### Modified Embodiment of Seventh Embodiment

In the seventh embodiment, the metal flat plate 27 having almost the same width as that of the corrugated metal plate 26 is used, however, a metal flat plate 27 having a width being smaller than that of a metal plate 26 may be used and the number of the metal flat plates 27 may be single or two and more. Moreover, forming of a through hole in a metal flat plate is not required depending on a need.

### Eighth Embodiment

In an eighth embodiment, a surface of the metal porous body employed in the first to seventh embodiments (Fig. 1 to Fig. 11) is coated with a catalyst to promote burning of seized black smoke minute particles. The above catalyst mainly contains one substance out of a group of α -alumina, β -alumina, and γ -alumina or a composite consisting of two or more of them and it is preferable from viewpoints of stability and durability of a catalytic action that the substance constitutes 68% to 78% of the catalyst. More particularly, the catalyst mainly containing one substance out of a group of α-alumina, β-alumina, and γ-alumina or a composite consisting of two or more of them and further contains one substance out of a group of palladium, rhodium, ruthenium, titanium, nickel, iron, and cobalt is very preferable because it is excellent in catalytic reactivity. Moreover, the catalyst mainly containing one substance out of a group of α - alumina, β -alumina, and γ -alumina or a composite consisting of two or more of them and further containing ruthenium and at least one substance selected out of lithium zirconate, titanium oxide, potassium carbonate is preferable because it is also excellent in catalytic reactivity.

According to the eighth embodiment, with help of the catalyst, efficiency of seizing black smoke minute particles and of burning and removing unburnt minute particles can be enhanced.

### Ninth Embodiment

In a ninth embodiment, a surface of the metal porous body employed in the first to seventh embodiments (Fig. 1 to Fig. 11) is coated with a catalyst to promote burning of seized black smoke minute particles and further the metal porous body has a positive-side terminal and a negative-side terminal and a metal filter having such the metal porous body is configured so as to be mounted on a black smoke minute particle removing apparatus as an electrical heating device (heater).

According to the configuration described above, the metal filter itself functions as the electrical heating device which enables the metal filter itself to be heated surely. Therefore, the efficiency of burning and removing unburnt minute particles is further enhanced, which can surely prevent clogging caused by the unburnt minute particles left in the metal filter. Moreover, in the ninth embodiment, the catalyst functions as an insulating coating film to coat the metal porous body and, therefore, no insulating coating film is required separately. However, if no catalyst is used, it is preferable that a surface of the metal porous body is coated with other appropriate incombustible insulating materials.

It is apparent that the present invention is not limited to the above embodiments but may be changed and modified without departing from the scope of the invention. For example, in each of the above embodiments, the metal filter is fabricated by winding up the corrugated metal porous body in a roll form, however, instead of this, it can be fabricated by folding back the corrugated metal porous body in zig-zag configuration. Moreover, in each of the above embodiments, the through holes (except the small through holes formed in the surface-holding protrusions) are bored in tops of the crest portions M and in bottoms of the trough portions V making up the above rising and falling portions, however, so long as the surface-holding protrusions do not protrude extremely from the column-like concave portions (it is preferable that the surface-holding protrusions are placed within the column-like concave portions), for example, when the corrugated shape of the metal plate is sine-wave shaped, triangular-wave shaped or a like, the through holes may be bored in oblique surfaces positioned in intermediate locations between the crest portions M and trough portions V of the metal plate.

## Claims

1. A metal filter **characterized by** comprising:
a metal porous body (3) fabricated by winding up or folding back, in a multi-layer manner and in a direction of corrugation, a corrugated metal plate (26) in which many through holes (2) having surface-holding protrusions (1, 7, 11, 15, 18, 22, 28) in edge portions of each of said many through holes (2, 9, 12, 17, 19, 23, 29, 31) are bored and which repeatedly forms column-like rising and falling portions, for seizing and removing black smoke minute particles contained in exhaust gas from a diesel engine by making said exhaust gas pass through clearances (4) among layers in said metal porous body (3, 6, 10, 14, 20, 30);
wherein approximately all or a greater part of said surface-holding protrusions (1, 7, 11, 15, 18, 22, 28) are formed on sides of column-like concave portions (5) out of said column-like rising and falling portions, and
wherein said clearances (4) among layers, each serving as a flow path for said exhaust gas from a diesel engine, existing on one side of said metal plate communicate with said clearances (4) among layers, also each serving as a flow path for said exhaust gas from a diesel engine, existing on another side of said metal plate through said through holes (2, 9, 12, 17, 19, 23, 29, 31) having said surface-holing protrusions.

2. A metal filter **characterized by** comprising:
a metal porous body (3, 6, 10, 14, 20, 30) fabricated by winding up or folding back, in a multi-layer manner and in a direction of corrugation, a corrugated metal plate (26) in which many through holes (2, 9, 12, 17, 19, 23, 29, 31) having surface-holding protrusions (1, 7, 11, 15, 18, 22, 28) in edge portions of each of said many through holes (2, 9, 12, 17, 19, 23, 29, 31) are bored and which repeatedly forms column-like rising and falling portions, for seizing and removing black smoke minute particles contained in exhaust gas from a diesel engine by making said exhaust gas pass through clearances (4) among layers in said metal porous body (3, 6, 10, 14, 20, 30);
wherein said through holes (2, 9, 12, 17, 19, 23, 29, 31) are bored in crest portions (M) and trough portions (V) making up said column-like rising and falling portions and approximately all or a greater part of said surface-holding protrusions (1, 7, 11, 15, 18, 22, 28) are formed on sides of column-like concave portions (5) corresponding to lower parts of said crest portions (M) and to upper parts of said trough portions (V), and
wherein said clearances (4) among layers, each serving as a flow path for said exhaust gas from a diesel engine, existing on one side of said metal plate communicate with said clearances (4) among layers, also each serving as a flow path for said exhaust gas from a diesel engine, existing on another side of said metal plate through said through holes (2, 9, 12, 17, 19, 23, 29, 31) having said surface-holing protrusions.

3. The metal filter according to Claim 2, wherein, in said metal porous body (3, 6, 10, 14, 20, 30), approximately all or a greater part of many surface-holding protrusions (1, 7, 11, 15, 18, 22, 28) are formed in edge portions of said through holes (2, 9, 12, 17, 19, 23, 29, 31) in a manner in which said surface-holding protrusions (1, 7, 11, 15, 18, 22, 28) are placed within column-like concave portions (5) without extending off said column-like concave portions (5).

4. The metal filter according to Claim 2, wherein, in said metal porous body (3, 6, 10, 14, 20, 30 ) , said many surface-holding protrusions (1, 7, 11, 15, 18, 22, 28) or many of said surface-holding protrusions (1, 7, 11, 15, 18, 22, 28) having main sizes out of said surface-holding protrusions (1, 7, 11, 15, 18, 22, 28) are formed in said edge portions of said through holes (2, 9, 12, 17, 19, 23, 29, 31) in a manner in which said surface-holding protrusions (1, 7, 11, 15, 18, 22, 28) interrupt flows of said exhaust gas from a diesel engine within said clearances (4) among layers.

5. The metal filter according to Claim 2, wherein, in said metal porous body (3, 6, 10, 14, 20, 30), said many surface-holding protrusions (1, 7, 11, 15, 18, 22, 28) or many of said surface-holding protrusions (1, 7, 11, 15, 18, 22, 28) having main sizes out of said surface-holding protrusions (1, 7, 11, 15, 18, 22, 28) are formed in edge portions positioned on lower stream sides of said flows out of edge portions of said through holes (2, 9, 12, 17, 19, 23, 29, 31) in a manner in which said surface-holding protrusions (1, 7, 11, 15, 18, 22, 28) interrupt flows of said exhaust gas from a diesel engine within said clearances (4) among layers.

6. The metal filter according to Claim 4, wherein, in said metal porous body (3, 6, 10, 14, 20, 30), said many surface-holding protrusions (1, 7, 11, 15, 18, 22, 28) or many of said surface-holding protrusions (1, 7, 11, 15, 18, 22, 28) having main sizes out of said surface-holding protrusions (1, 7, 11, 15, 18, 22, 28) are formed in said edge portions of said through holes (2, 9, 12, 17, 19, 23, 29, 31), one by one or by two or more, in staggered or zig-zag arrangements in a longitudinal direction within said column-like concave portions (5).

7. The metal filter according to Claim 6, wherein, in said metal porous body (3, 6, 10, 14, 20, 30), said many through holes (2, 9, 12, 17, 19, 23, 29, 31) are formed one by one or by two or more and in staggered or zig-zag arrangements, in a longitudinal direction within said column-like concave portions (5) making up said rising and falling portions.

8. The metal filter according to Claim 6, wherein, in said metal porous body (3, 6, 10, 14, 20, 30), said many surface-holding protrusions (1, 7, 11, 15, 18, 22, 28) formed in staggered or zig-zag arrangements or many of said surface-holding protrusions (1, 7, 11, 15, 18, 22, 28) having main sizes out of said surface-holding protrusions (1, 7, 11, 15, 18, 22, 28) are formed in a manner in which, when seen from said longitudinal direction within said column-like concave portions (5), partially overlap.

9. The metal filter according to Claim 2, wherein a relation between a height H of each of said surface-holding protrusions (1, 7, 11, 15, 18, 22, 28) and a depth D of each of said column-like concave portions (5) making up said rising and falling portions is set so that 0 . 7D ≦ H ≦ 1. OD.

10. The metal filter according to Claim 2, wherein said corrugated metal plate (26) is made up of a metal plate which repeatedly forms approximately sine-wave shaped, approximately triangular- wave shaped, approximately square-wave shaped, or approximately trapezoidal-wave shaped rising and falling portions.

11. The metal filter according to Claim 2, wherein, in said metal porous body (3, 6, 10, 14, 20, 30), one or more minute through holes (21, 24) are bored in each of said surface-holding protrusions (1, 7, 11, 15, 18, 22, 28) themselves.

12. The metal filter according to Claim 2, wherein said metal filter is fabricated by winding up or folding back said corrugated metal plate (26) andametal flat plate (27) in a multi-layer manner in a manner in which said corrugated metal plate (26) and said metal flat plate (27) , having a metal surface being approximately flat compared with that of said corrugated metal plate (26) and having a same width as said corrugated metal plate (26) or having a width being smaller than that of said corrugated metal plate (26), overlap one another.

13. The metal filter according to Claim 12, wherein many through holes (2, 9, 12, 17, 19, 23, 29, 31) are bored also in said metal flat plate (27).

14. The metal filter according to Claim 13, wherein many through holes (2, 9, 12, 17, 19, 23, 29, 31) each having surface-holding protrusions (1, 7, 11, 15, 18, 22, 28) in edge portions of said through hole are bored in said corrugated metal plate (26) and many through holes (2, 9, 12, 17, 19, 23, 29, 31) having no surface-holding protrusions (1, 7, 11, 15, 18, 22, 28) in edge portions of said through hole are bored in said metal flat plate (27).

15. The metal filter according to Claim 2, wherein said metal porous body (3, 6, 10, 14, 20, 30) is coated with a catalyst which promotes burning of seized black smoke minute particles.

16. The metal filter according to Claim 2, wherein said metal porous body (3, 6, 10, 14, 20, 30) undergoes specified insulating coating processes and is connected to a power source, which causes said metal porous body (3, 6, 10, 14, 20, 30) to function as an electrical heating body to burn said seized black smoke minute particles.

17. A black smoke minute particle removing apparatus having the metal filter stated in Claim 1 on a path for exhaust gas from a diesel engine.

18. A diesel engine automobile being equipped with the black smoke minute particle removing apparatus stated in Claim 17 on the path for exhaust gas from a diesel engine.

19. A black smoke minute particle removing apparatus having the metal filter stated in Claim 2 on a path for exhaust gas from a diesel engine.

20. A diesel engine automobile being equipped with the black smoke minute particle removing apparatus stated in Claim 19 on the path for exhaust gas from a diesel engine.

21. The metal filter according to Claim 1, wherein approximately all or a greater part of said surface-holding protrusions (1, 7, 11, 15, 18, 22, 28) are formed in a bent and erected manner from edge portions of said through holes (2, 9, 12, 17, 19, 23, 29, 31) toward sides of said column-like concave portions (5) making up column-like rising and falling portions.

22. The metal filter according to Claim 1, wherein each of said through holes (2, 9, 12, 17, 19, 23, 29, 31) has a surrounding edge made up of four side edge portions and, in each of said edge portions, each of said surface-holding protrusions (1, 7, 11, 15, 18, 22, 28) is formed in a bent and erected manner toward a side of each of said column-like concave portions (5) making up said column-like rising and falling portions.

23. The metal filter according to Claim 2, wherein each of said through holes (2, 9, 12, 17, 19, 23, 29, 31) has a surrounding edge made up of four side edge portions and is bored in said crest and said trough.making up said column-like rising and falling portions and, in each of said edge portions, each of said surface-holding protrusions (1, 7, 11, 15, 18, 22, 28) is formed in a bent and erected manner toward a side of each of said column-like rising and falling portions corresponding to a lower part of said crest and to an upper part of said trough.
